# EUROPÄISCHE PATENTSCHRIFT

(11) **EP 3 715 190 B1**
(45) Veröffentlichungstag und Bekanntmachung des Hinweises auf die Patenterteilung: **25.06.2025**
(21) Anmeldenummer: 20158780.5
(22) Anmeldetag: 21.02.2020
(51) Int. Cl.: B60R 25/24, G08G 1/16, B62D 15/02

(54) **VERFAHREN ZUM EINPARKEN EINES KRAFTFAHRZEUGS IN EINE PARKZONE MIT EINEM AUTONOMEN PARKVORGANG AUSGEHEND VON EINER TEMPORÄREN PARKPOSITION, PARKASSISTENZSYSTEM SOWIE KRAFTFAHRZEUG**
METHOD FOR PARKING A MOTOR VEHICLE IN A PARKING ZONE WITH AN AUTONOMOUS PARKING PROCESS STARTING FROM A TEMPORARY PARKING POSITION, PARKING ASSIST SYSTEM AND MOTOR VEHICLE
PROCÉDÉ DE STATIONNEMENT AUTONOME D'UN VÉHICULE AUTOMOBILE DANS UNE ZONE DE STATIONNEMENT EN PARTANT D'UNE POSITION DE STATIONNEMENT TEMPORAIRE, SYSTÈME D'AIDE AU STATIONNEMENT AINSI QUE VÉHICULE AUTOMOBILE

(30) Priorität: 27.03.2019 DE 102019204203
(43) Veröffentlichungstag der Anmeldung: 30.09.2020
(73) Patentinhaber: VOLKSWAGEN AG, 38440 Wolfsburg (DE)
(72) Erfinder: Göricke, Bastian, 38446 Wolfsburg (DE); Hüger, Philipp, 38471 Rühen (DE)

(56) Entgegenhaltungen:
- EP-A1- 2 886 420
- DE-A1- 102014 224 454
- DE-A1- 102016 219 698
- US-A1- 2015 039 173
- US-A1- 2017 217 404
- US-A1- 2018 174 460
- US-B1- 9 522 675

## Beschreibung

Ein Aspekt der Erfindung betrifft ein Verfahren zum Einparken eines Kraftfahrzeugs in eine Parkzone, bei welchem das Kraftfahrzeug auf einem Weg außerhalb der Parkzone bis zur Parkzone gefahren wird und dann in die Parkzone autonom eingeparkt wird. Ein weiterer Aspekt der Erfindung betrifft ein elektronisches Parkassistenzsystem für ein Kraftfahrzeug. Ein weiterer Aspekt der Erfindung betrifft auch ein Kraftfahrzeug.

Bekannt ist es, dass Kraftfahrzeuge durch einen Fahrzeugführer beziehungsweise Fahrer in eine gekennzeichnete und damit definierte Parkzone eingeparkt werden können. Dabei führt der Fahrzeugführer selbst manuell die erforderlichen Bewegungen des Kraftfahrzeugs durch, indem er das Lenkrad betätigt und das Fahrzeug bremst oder beschleunigt.

Bekannt ist es auch, dass bei Kraftfahrzeugen teilautonome oder auch bereits vollautonome Parkvorgänge durchgeführt werden. Dabei ist der Fahrzeugführer, der sich im Fahrzeug befindet, nur noch teilweise oder gar nicht mehr an dem Parkvorgang beteiligt. Der Parkvorgang wird dann zumindest teilweise durch ein elektronisches Parkassistenzsystem des Kraftfahrzeugs durchgeführt.

Der DE 10 2012 222 562 A1 ist ein System für bewirtschaftete Parkflächen zur Überführung eines Fahrzeugs von einer Startposition in eine Zielposition offenbart. Darüber hinaus ist aus der DE 10 2016 122 760 A1 ein Verfahren zum Betreiben eines Fahrerassistenzsystems eines Kraftfahrzeugs zum Manövrieren des Kraftfahrzeugs zu verschiedenen Zielpunkten bekannt. In dem Zusammenhang ist es auch bekannt, dass das Fahrzeug außerhalb der Parkzone bis zu der Parkzone hin durch den Fahrzeugführer manuell bewegt wird und der eigentliche Einparkvorgang dann durch das Parkassistenzsystem durchgeführt wird. Dies ist beispielsweise aus der DE 10 2009 046 912 A1 bekannt.

In der US 2015/039173 A1 ist ein Verfahren beschreiben, bei welchem ein unsauber in einer Parkzone geparktes Fahrzeug auch durch einen autonomen Parkvorgang nach dem Verlassen des Fahrzeugs durch den Fahrer in eine verbesserte Parkposition umgeparkt werden kann. Aus der DE 10 2014 224 454 A1 ist ebenfalls das Umparken eines Kraftfahrzeugs in einer Parkzone bekannt.

Bei diesem Manöver befindet sich der Fahrer auch beim Einparkvorgang selbst noch im Fahrzeug, bis dieses die endgültige Endposition in der Parkzone erreicht hat.

Aus der DE 10 2016 219698 A1 ist ein Parkraumverwaltungssystem bekannt. Der Benutzer stellt sein Fahrzeug in einem vorgegebenen Abgabebereich des Parkraums ab und sendet eine Einparkanfrage. Dem Fahrzeug dieses Benutzers wird vom Parkraumverwaltungssystem ein Parkplatz zugewiesen. Das Fahrzeug wird in den zugewiesenen Parkplatz verbracht.

Aus der EP 2 886 420 A1 ist ein Verfahren zum Veranlassen des Sendens einer Parkanweisung bekannt. Dabei wird ein Parkbereich für ein Fahrzeug und ein Objekt innerhalb des Parkbereichs identifiziert, festgestellt, ob innerhalb des Parkbereichs ausreichend Platz für die Schaffung einer Parklücke vorhanden ist, eine Parkanweisung auf der Grundlage der Parklücke und des Objekts bestimmt und das Senden der Parkanweisung veranlasst.

Darüber hinaus ist es auch bekannt, dass ein Fahrzeug vor dem durchzuführenden Einparkvorgang vom Fahrzeugführer verlassen werden kann und der Fahrzeugführer dann von außerhalb des Fahrzeugs einem dann nachfolgenden autonomen Einparkvorgang in eine Parkzone beiwohnt, dabei jedoch nicht mehr im Fahrzeug selbst ansässig ist. Bei diesen extern durch den Fahrzeugführer gesteuerten Einparkvorgängen eines Kraftfahrzeugs muss der Fahrzeugführer jedoch noch in der Nähe des Fahrzeugs sein und den Einparkvorgang begleiten beziehungsweise überwachen. Die EP 2 886 420 A1 zeigt die Merkmale des Oberbegriffs des Anspruchs 1.

In dem Zusammenhang ist darauf hinzuweisen, dass bei allen genannten Szenarien, bei denen zumindest ein teilautonomes Einparken durchgeführt wird, der Zeitaufwand noch relativ groß ist. Dies bedeutet auch, dass gerade in Verkehrsszenarien, bei welchen auch andere Verkehrsteilnehmer durch einen derartigen Einparkvorgang betroffen sind, Zeit verloren geht und diese warten müssen. Dies führt zu Staus und führt andererseits auch zur Verärgerung der anderen Verkehrsteilnehmer. Ein weiterer Aspekt ist darin zu sehen, dass der Fahrzeugführer des einzuparkenden Fahrzeugs dem Einparkvorgang selbst noch beiwohnen muss und dadurch auch selbst Zeit verliert.

Es ist Aufgabe der vorliegenden Erfindung, ein Verfahren zum Einparken eines Kraftfahrzeugs zu schaffen, bei welchem ein bedarfsgerechteres Einparken des Kraftfahrzeugs erfolgt und Zeitverluste und Verkehrsbeeinträchtigungen reduziert werden können.

Des Weiteren ist es Aufgabe, ein entsprechendes elektronisches Parkassistenzsystem sowie ein entsprechendes Kraftfahrzeug zu schaffen.

Diese Aufgabe wird durch ein Verfahren, ein elektronisches Parkassistenzsystem und ein Kraftfahrzeug gemäß den unabhängigen Ansprüchen gelöst.

Ein Aspekt der Erfindung betrifft ein Verfahren zum Einparken eines Kraftfahrzeugs in eine Parkzone, bei welchem das Kraftfahrzeug auf einem Weg außerhalb der Parkzone bis zur Parkzone gefahren wird und dann in die Parkzone autonom eingeparkt wird. Das Kraftfahrzeug wird mit einem in dem Kraftfahrzeug anwesenden Fahrer beziehungsweise Fahrzeuginsassen bis zur Parkzone gefahren und in einer Temporärparkposition in der Parkzone abgestellt. Nach dem Erreichen der Temporärparkposition des Kraftfahrzeugs verlässt der Fahrer beziehungsweise der Fahrzeuginsasse das Kraftfahrzeug. Anschließend wird, insbesondere abhängig von zumindest einem Entscheidungskriterium, gegebenenfalls ein autonomer Parkvorgang durchgeführt. Durch einen autonomen Parkvorgang wird das Kraftfahrzeug in einer insbesondere von der Temporärparkposition unterschiedlichen Endparkposition in einer freien Parkzone positioniert. Durch ein derartiges Verfahren zum Einparken eines Kraftfahrzeugs wird der Parkvorgang effizienter gestaltet. Dies insbesondere im Hinblick darauf, dass Verkehrsbeeinträchtigungen, die bei den bisherigen bekannten Einparkvorgängen, insbesondere bei den zumindest teilweise autonomen Einparkvorgängen, auftreten können, zumindest deutlich reduziert werden. Zusätzlich oder anstatt dazu wird ein weiterer Vorteil dahingehend erreicht, dass ein Fahrer beziehungsweise Fahrzeuginsasse ebenfalls einen Zeitgewinn erfährt, da er nach dem Erreichen der Temporärparkposition bereits das Fahrzeug verlassen kann und auch nicht mehr dem gegebenenfalls durchzuführenden weiteren, dann nachfolgenden autonomen Parkvorgang beiwohnen muss. Er kann daher nach dem Verlassen des Fahrzeugs und vor dem Durchführen des autonomen Parkvorgangs bereits seinem eigentlichen Interesse nachkommen und kann sich dann auch bereits vom Kraftfahrzeug entfernen.

Es ist vorgesehen, dass das Durchführen des autonomen Parkvorgangs zum Erreichen der Endposition ausgehend von der Temporärparkposition durch den Fahrer initiiert wird. Dadurch wird die Möglichkeit geschaffen, dass der Fahrer selbst entscheiden kann, ob die Temporärparkposition bereits so gut ist, dass kein nachfolgendes Durchführen des autonomen Parkvorgangs erforderlich ist. Auch dies kann ein Entscheidungskriterium sein. Insbesondere ist es durch diese Ausführung jedoch möglich, dass hohen Sicherheitsanforderungen Genüge getan wird. So kann beispielsweise der Fahrer nach dem Verlassen des Fahrzeugs noch gegebenenfalls im Fahrzeug befindliche Gegenstände mitnehmen. So kann es beispielsweise ermöglicht sein, dass nach dem Erreichen der Temporärparkposition und dem Verlassen des Kraftfahrzeugs durch den Fahrer Gegenstände aus dem Kofferraum oder aus dem Fond des Fahrzeugs entnommen werden können, ohne dass das Kraftfahrzeug bereits mit dem autonomen Parkvorgang beginnen würde. Damit kann der Fahrer Handlungen, die er nach dem Verlassen des Kraftfahrzeugs noch im Bereich des Kraftfahrzeugs durchführen will, uneingeschränkt erledigen, ohne dass der autonome Parkvorgang diesbezüglich schon dann gegebenenfalls unerwünscht beginnen würde.

Eine Parkzone ist eine gekennzeichnete Parkfläche beziehungsweise ein Parkbereich. Eine Parkzone kann in einer Parkgarage oder in einem Parkhaus oder auf einer freien Parkfläche ausgebildet sein.

Bei dem Einparkvorgang wird somit ein intelligenteres Szenario ermöglicht, welches in vielerlei Hinsicht den tatsächlichen Gegebenheiten bei gegenwärtigen Einparkvorgängen, die insbesondere auch zumindest teilweise autonom durchgeführt werden, entgegenwirkt. Indem nämlich das Kraftfahrzeug bei Annäherung an die Parkzone und dann auch ohne einen autonomen Parkvorgang durchzuführen, der somit insbesondere auch nicht teilautonom ist, in die Parkzone einfährt und die Temporärparkposition einnimmt, wird ein Verkehrsfluss, der sich um die Parkzone und/oder um das Kraftfahrzeug herum ergibt oder vorherrscht, durch diesen primären Parkvorgang, der bei dem gesamten Einparkvorgang durchgeführt wird, nicht beeinträchtigt. Da ein derartiger primärer Parkvorgang sehr schnell und unverzüglich erfolgen kann, werden andere Verkehrsteilnehmer dadurch nicht beeinträchtigt und müssen gegebenenfalls auch nicht relativ lange warten, bis das Kraftfahrzeug in die Parkzone einfährt und die Temporärparkposition einnimmt. In der Temporärparkposition ist das Kraftfahrzeug insbesondere zumindest so weit in die Parkzone eingefahren beziehungsweise eingeparkt, dass es den Verkehrsfluss einer Fahrbahn, die an der Parkzone vorbeiführt, nicht behindert. Somit ist es vorgesehen, dass die Temporärparkposition zumindest eine derartige ist, bei welcher fremde Verkehrsteilnehmer auf der an der Parkzone vorbeiführenden Fahrbahn vorbeifahren können.

Durch diesen primären beziehungsweise ersten Parkvorgang in dem geschilderten gesamten Einparkszenario wird das Kraftfahrzeug somit zunächst in einer Zwischenparkstellung, die die Temporärparkposition ist, in der Parkzone abgestellt und somit insbesondere manuell schnellstmöglich in die Parkzone eingefahren, sodass diesbezüglich ein Nichtbehindern des Verkehrsflusses in diesem primären Parkvorgang im Vordergrund steht. Andererseits ist durch diesen primären Parkvorgang schnellstmöglich erreicht, dass das Kraftfahrzeug bereits so abgestellt ist, dass es der Fahrer beziehungsweise der Fahrzeuginsasse bereits verlassen kann und somit auch diesbezüglich ein möglichst geringer Zeitaufwand für diesen Fahrer vorliegt, um vom Erreichen der Parkzone außerhalb der Parkzone bis zu diesem Erreichen der Temporärparkposition vergeht. Bei dem geschilderten, zeitlich nachfolgenden dann zweiten Parkvorgang des gesamten Einparkszenarios, nämlich dem autonomen Parkvorgang, wird dann insbesondere unabhängig von der Anwesenheit des Fahrers, sowohl im Kraftfahrzeug als auch im unmittelbaren Umgebungsbereich des Kraftfahrzeugs, das Kraftfahrzeug so abgestellt, dass es in einer Endparkposition in einer Parkzone positioniert wird, insbesondere falls dies erforderlich ist.

In vorteilhafter Weise wird durch ein elektronisches Parkassistenzsystem des Kraftfahrzeugs beurteilt, ob dieser zweite Parkvorgang, der dann ein vollautonomer Parkvorgang ist, erforderlich ist oder nicht. Dies kann beispielsweise abhängig von der Temporärparkposition als ein mögliches Entscheidungskriterium sein. Beispielsweise kann hier die Orientierung des Kraftfahrzeugs zur Parkzone und/oder zu einer benachbarten Parkzone, und/oder der Belegungszustand der Parkzone und/oder der benachbarten Parkzone durch das Kraftfahrzeug, und/oder die Position des Kraftfahrzeugs zur an die Parkzone angrenzenden Fahrbahn ein Entscheidungskriterium sein. Zusätzlich oder anstatt dazu können auch Umgebungsinformationen und/oder andere Parkzoneninformationen als Entscheidungskriterien genannt sein.

Insbesondere kann vorgesehen sein, dass bei dem autonomen Parkvorgang das Kraftfahrzeug in diejenige Parkzone eingeparkt wird, in welcher es sich, zumindest hauptsächlich, auch in der Temporärparkposition befunden hat. Es kann jedoch auch vorgesehen sein, dass das Kraftfahrzeug in eine, insbesondere direkt, zu dieser Parkzone, insbesondere direkt benachbarte, insbesondere direkt angrenzende, weitere Parkzone autonom eingeparkt wird. Insbesondere wenn vorher erkannt wurde, dass diese weitere Parkzone frei ist. Das Parkassistenzsystem weist daher vorteilhafterweise auch eine derartige Intelligenz auf, dass es entscheiden kann, in welche Parkzone von zwei benachbarten freien Parkzonen es das Kraftfahrzeug beim autonomen Parkvorgang einparkt.

Eine derartige systemseitige Entscheidung kann von Entscheidungskriterien, insbesondere den oben genannten Entscheidungskriterien, abhängig sein.

Vorteilhaft ist es, wenn diese Entscheidung, in welche von zumindest zwei benachbarten freien Parkzonen das Kraftfahrzeug beim zweiten Parkvorgang, nämlich dem vollautonomen Parkvorgang, eingeparkt wird, abhängig von einem systemseitig durchgeführten Vergleich der Zeitdauern für das autonome Einparken in die eine Parkzone und das autonome Einparken in die weitere Parkzone durchgeführt wird. Diese Zeitdauern können, insbesondere abhängig von den oben genannten Entscheidungskriterien, durch das Parkassistenzsystem geschätzt werden. Somit wird der autonome Parkvorgang besonders schnell und somit den Verkehrsfluss am wenigsten behindernd durchgeführt.

Das Verfahren ist auch dahingehend vorteilhaft, da eine Temporärparkposition auch eine derartige sein kann, die im Hinblick auf Parkvorschriften in der Parkzone und/oder anderweitige Erfordernisse nicht korrekt ist oder nur eingeschränkt tauglich ist. Beispielsweise kann eine Temporärparkposition auch eine derartige sein, bei welcher das Kraftfahrzeug schräg in einer als Längsparklücke oder Querparklücke ausgebildeten Parkzone angeordnet ist. Dies bedeutet, dass die Fahrzeuglängsachse gegebenenfalls auch in einem großen Winkel zu einer Längsachse der Parkzone orientiert sein kann. Eine derartige Temporärparkposition, die dann für das hier vorgestellte Szenario auch möglich und zulässig ist, würde jedoch auch dazu führen, dass gegebenenfalls benachbarte weitere Parkzonen nicht mehr von anderen Kraftfahrzeugen genutzt werden können oder dort bereits abgestellte Kraftfahrzeuge beispielsweise zum Einsteigen nur noch schwer zugänglich sind und/oder zum Ausparken erschwerte Bedingungen gegeben sind. Da eine derartige Temporärparkposition zumindest für andere Verkehrsteilnehmer zur Nutzung benachbarter Parkzonen nachteilig ist, ist durch das vorgeschlagene gesamte Einparkszenario diese Temporärparkposition baldmöglichst zu korrigieren und die dann korrekte Endparkposition auf den autonomen Parkvorgang abzustellen. Darüber hinaus kann eine Temporärparkposition auch eine derartige sein, bei welcher das Kraftfahrzeug zumindest bereichsweise auch in eine zur Parkzone benachbarte weitere Parkzone hineinragt und somit die Nutzung einer derartigen benachbarten Parkzone nur noch eingeschränkt oder gegebenenfalls gar nicht mehr möglich ist. Ebenso kann eine Temporärparkposition eine derartige sein, die zwar ein im Wesentlichen paralleles Ausrichten der Fahrzeuglängsachse zu der Längsachse der Parkposition aufweist, jedoch das Kraftfahrzeug im Hinblick auf die Breitenrichtung der Parkzone deutlich außermittig positioniert ist. Beispielsweise kann in dem Zusammenhang eine Temporärparkposition auch eine derartige sein, bei welcher das Kraftfahrzeug beispielsweise auch auf einer Bodenmarkierung, die eine Längsbegrenzung der Parkzone darstellt, abgestellt ist. Auch dadurch ist eine unmittelbar benachbarte Parkzone für ein weiteres Kraftfahrzeug nicht mehr oder nur noch sehr schwer und eingeschränkt nutzbar. Ebenso kann eine Temporärparkposition eine derartige sein, bei welcher das Kraftfahrzeug noch nicht vollständig in die Parkzone eingefahren ist und in dem Zusammenhang noch ein Stück über den Einfahrbereich der Parkzone aus der Parkzone herausstehend angeordnet ist. All diese beispielhaften Erläuterungen für Temporärparkpositionen sind im vorliegenden Kontext des vorgeschlagenen Verfahrens möglich und ergeben sich in der tatsächlichen Praxis relativ häufig. Dies insbesondere dahingehend, dass Fahrzeugführer aufgrund großer Eile nur derartige Temporärparkpositionen einnehmen und/oder aufgrund fahrerischer Einschränkungen nur derartige Temporärparkpositionen schaffen.

Durch das vorgeschlagene Verfahren werden all diese oben genannten Aspekte berücksichtigt, sodass ein in vielfältiger Hinsicht effizienteres gesamtes Parkszenario beziehungsweise Einparkszenario ermöglicht wird, bei welchem sowohl einerseits potentiell auftretende Nachteile beim Einparken geschickt dahingehend genutzt werden, um durch eine Gesamtbetrachtung einen verbesserten Gesamtparkvorgang für möglicherweise vielfältige Beteiligte zu erreichen.

In einer vorteilhaften Ausführung wird die Temporärparkposition durch ein manuelles Führen des Kraftfahrzeugs durch den Fahrer erreicht. Dies ist dahingehend eine vorteilhafte Ausführung, da sie diesen oben geschilderten ersten Parkvorgang in besonders schneller Art und Weise ermöglicht und aufgrund gegebener Realisierungsmöglichkeiten sich dieser üblicherweise schneller ermöglichen lässt, als es ein autonomer Parkvorgang ermöglichen würde.

Vorzugsweise ist vorgesehen, dass die Temporärparkposition durch ein einziges Einfahren des Kraftfahrzeugs in die Parkzone von außerhalb der Parkzone erreicht wird. Dadurch wird dieser erste Parkvorgang besonders schnell durchgeführt, da kein umfängliches mehrzügiges Durchführen des ersten Parkvorgangs erforderlich ist und somit kein Rangieren erforderlich ist. Damit wird nicht nur der erste Parkvorgang sehr schnell durchgeführt, sondern auch der im Umgebungsbereich der Parkzone stattfindende Verkehrsfluss möglichst wenig beeinträchtigt.

Darüber hinaus ist es dadurch auch ermöglicht, dass der Fahrer möglichst schnell dann auch die Option erhält, das Kraftfahrzeug verlassen zu können, sodass er auch hier keinen Zeitverlust erfährt, um seine geplanten Aktivitäten, die nach dem Parken des Kraftfahrzeugs zu erledigen sind, durchführen zu können.

In einer vorteilhaften Ausführung ist vorgesehen, dass das tatsächliche Starten des, dann insbesondere durch den Fahrer schon initiierten, autonomen Parkvorgangs durch ein elektronisches Parkassistenzsystem des Kraftfahrzeugs selbst bestimmt wird. Dies ist eine weitere sehr vorteilhafte Ausführung, da es somit nicht mehr dem Fahrer obliegt, den Umgebungsbereich der Parkzone dahingehend zu beobachten und zu entscheiden, ob der autonome Parkvorgang durchgeführt werden kann. Auch dadurch ist ein entsprechender zeitlicher Vorteil für den Fahrer erreicht und eine gewisse Unabhängigkeit des Fahrers bezüglich zu treffender Entscheidungen ermöglicht. Er kann somit beispielsweise auch relativ zeitnah nach dem Verlassen des Kraftfahrzeugs den autonomen Parkvorgang initiieren und das elektronische Parksystem ist damit in einen derartigen Zustand versetzt, dass es weiß, dass es überhaupt einen autonomen Parkvorgang im Weiteren durchführen soll. Das elektronische Parkassistenzsystem kann dann im Weiteren selbst entscheiden, wann es diesen autonomen Parkvorgang tatsächlich durchführt.

Darüber hinaus kann dieses tatsächliche Starten des autonomen Parkvorgangs durch ein elektronisches Parkassistenzsystem des Kraftfahrzeugs auch unabhängig von dem vorhergehenden Initiieren durch einen Fahrer erfolgen. Beispielsweise dann, wenn ein derartiges Initiieren in einem Ausführungsbeispiel grundsätzlich nicht vorgesehen ist. So kann dies auch dann der Fall sein, wenn ein Fahrer das Initiieren zwar vornehmen müsste, dies jedoch beispielsweise vergisst. In dem Zusammenhang kann vorgesehen sein, dass in einer vorteilhaften Ausführung ein Zeitintervall vorgegeben wird, welches seit einem Erreichen der Temporärparkposition, insbesondere zwischen einem Verlassen des Fahrers des Kraftfahrzeugs nach dem Erreichen der Temporärparkposition, verstreicht, und welches vom Parkassistenzsystem abgewartet wird, ob ein Initiieren erfolgt. Wird somit innerhalb eines derartigen Zeitintervalls kein derartiges Initiieren von dem elektronischen Parkassistenzsystem registriert, kann es auch in derartigen Fällen automatisch dennoch einen derartigen autonomen Parkvorgang durchführen.

Vorzugsweise ist vorgesehen, dass dieses tatsächliche Starten des autonomen Parkvorgangs durch ein Parkassistenzsystem des Kraftfahrzeugs abhängig von aktuellen Verkehrssituationen und/oder zukünftig zu erwartenden Verkehrssituationen in einem Bereich einer an die Parkzone angrenzenden Fahrbahn durchgeführt wird. Somit ist eine möglichst geringe Beeinträchtigung des Verkehrsflusses auf der Fahrbahn im Bereich der Parkzone ermöglicht. Insbesondere kann in dem Zusammenhang so lange abgewartet werden, bis erkannt wird, dass kein oder nur ein geringes Verkehrsaufkommen auf dieser Fahrbahn vorliegt oder zu erwarten ist. Zusätzlich oder anstatt dazu kann auch vorgesehen sein, dass dieses tatsächliche Starten des autonomen Parkvorgangs durch das Parkassistenzsystem des Kraftfahrzeugs unabhängig davon durchgeführt wird, ob sich der Fahrer noch neben dem Kraftfahrzeug oder nicht befindet, insbesondere unabhängig von einem Entfernen des Fahrers vom Kraftfahrzeug nach dem Verlassen des Kraftfahrzeugs durchgeführt wird. Es ist also bei dieser Ausführungsform nicht erforderlich, dass der Fahrer im Umgebungsbereich des Kraftfahrzeugs so lange verweilt, bis der autonome Parkvorgang durchgeführt wird, insbesondere beendet ist. Dies ist ein wesentlicher Vorteil dahingehend, dass ein Zeitgewinn für den Fahrer besteht, da er sich unverzüglich nach dem Verlassen des Kraftfahrzeugs seinen anderweitigen Aufgaben widmen kann und nicht mehr dem weiteren, zweiten Parkvorgang des Kraftfahrzeugs beiwohnen muss, insbesondere diesen nicht mehr beobachten und überwachen muss.

Es ist vorgesehen, dass der Fahrer beim Initiieren des autonomen Parkvorgangs vorgibt, ob das Kraftfahrzeug beim autonomen Parkvorgang vorwärts oder rückwärts in die Parkzone eingeparkt werden soll. Dies ist ein weiterer Vorteil, denn somit können Nutzerwünsche auch dahingehend berücksichtigt werden, wie dann bei einem Ausparken vorgegangen werden soll. Insbesondere dann, wenn das Ausparken aus der Parkzone manuell durch den Fahrer selbst gewünscht ist, kann in dem Zusammenhang eine vorteilhafte Orientierung des Kraftfahrzeugs durch den autonomen Parkvorgang eingestellt werden und somit die Endposition des Kraftfahrzeugs so erreicht werden, dass beim nachfolgenden Ausparken eine für den Fahrer vorteilhafte Orientierung des Kraftfahrzeugs vorliegt. Insbesondere kann in dem Zusammenhang gegebenenfalls auch ein beschleunigter Ausparkvorgang und/oder ein sicherer Ausparkvorgang ermöglicht werden. Insbesondere ist durch diese Möglichkeit auch ein Vorteil dahingehend geschaffen, dass gegebenenfalls ein einfacheres Beladen des in der Endposition abgestellten Kraftfahrzeugs erreicht ist. Erkennt der Fahrer in dem Zusammenhang beispielsweise, dass die Parkzone an dem dem Einfahrbereich gegenüberliegenden Endbereich beispielsweise durch erhöhte Begrenzungselemente, wie eine Wand oder Pfosten oder Pflanze, begrenzt ist, er nach Rückkehr zum Fahrzeug jedoch eine Beladung des Kofferraums vornehmen wird, da er gegebenenfalls entsprechende Gegenstände eingekauft oder erhalten hat, ist gegebenenfalls ein Vorwärtseinparken des Kraftfahrzeugs in die Parkzone vorteilhaft. Andererseits kann ein rückwärtiges Einparken in die Parkzone dann von Vorteil sein, wenn das Ausparken aus der Parkzone relativ schwierig ist, da es gegebenenfalls relativ unübersichtlich ist, in die an die Parkzone angrenzende Fahrbahn einzufahren.

In vorteilhafter Weise ist vorgesehen, dass ausgehend von der Temporärparkposition des Kraftfahrzeugs, insbesondere durch das elektronische Parkassistenzsystem des Kraftfahrzeugs, eine Startposition für das Kraftfahrzeug zum Durchführen des autonomen Parkvorgangs in die Parkzone außerhalb der Parkzone bestimmt wird und das Kraftfahrzeug autonom von der Temporärparkposition bis zur Startposition aus der Parkzone herausbewegt wird. Nach dem Erreichen der Startposition wird das weitere autonome Einparken in die Parkzone bis zur Endposition des Kraftfahrzeugs in der Parkzone durchgeführt. Auch dies ist eine weitere sehr vorteilhafte Ausführung, da das System bereits intelligent eine besonders geeignete Startposition ermittelt. Durch die Berücksichtigung der Temporärparkposition, die vielfältig sein kann, kann auch bereits während des Ausfahrens aus der Parkzone von der Temporärparkposition eine derartige Startposition bestimmt werden. Damit wird der autonome Parkvorgang ebenfalls zeitreduziert ermöglicht. Insbesondere ist es damit dynamisch möglich, eine geeignete Startposition zu finden. Es kann jedoch auch vorgesehen sein, dass unabhängig von der Temporärparkposition eine derartige Startposition für das Kraftfahrzeug außerhalb der Parkzone bestimmt wird oder vorgegeben wird.

Generell wird es durch diese vorteilhafte Ausführung ermöglicht, das Fahrzeug in vorteilhafter Startposition zu verbringen, was diesbezüglich dann auch wiederum relativ schnell erfolgen kann, um abhängig davon dann auch einen möglichst effizienten und somit auch möglichst schnellen zweiten Teil beziehungsweise eine zweite Teilphase des autonomen Parkvorgangs durchzuführen, der dann von der erreichten Startposition bis zur Endposition in der Parkzone reicht. Es wird also dadurch dann auch ermöglicht, dass auch bei dem autonomen Parkvorgang der Verkehrsfluss auf der Fahrbahn im Bereich außerhalb der Parkzone möglichst wenig beeinträchtigt wird.

Insbesondere ist es in dem Zusammenhang auch ermöglicht, dass, insbesondere auch, abhängig von der Temporärparkposition und/oder gegebenenfalls auch abhängig von der Vorgabe des Fahrers, ob das Kraftfahrzeug vorwärts oder rückwärts in die Parkzone in der Endposition orientiert sein soll, bestimmt wird, ob die Startposition so gewählt wird, dass ausgehend von der Startposition die Endposition in einem einzügigen autonomen Einparkvorgang erreicht werden kann oder nicht. Ebenso kann bei diesem Szenario dann auch bestimmt werden, ob es gegebenenfalls vorteilhaft ist, eine Startposition zu wählen, bei welcher dann ein mehrzügiges, beispielsweise zweizügiges, Einparken von der Startposition in die Endposition autonom durchgeführt wird. Diese Optionen, die durch das elektronische Parkassistenzsystem bestimmt werden, können insbesondere abhängig davon erfolgen, welches dann der zeitlich schnellste autonome Parkvorgang ist beziehungsweise bei welchem Szenario der zeitlich schnellste autonome Parkvorgang durchgeführt werden kann.

Vorzugsweise ist vorgesehen, dass ein Parkszenario beziehungsweise ein zweiter Parkvorgang des gesamten Einparkvorgangs beim autonomen Parken durchgeführt wird. Dieses Parkszenario beziehungsweise der zweite Parkvorgang wird durch ein elektronisches Parkassistenzsystem des Kraftfahrzeugs abhängig von der Orientierung des Kraftfahrzeugs in der Temporärparkposition und/oder abhängig von der vom Fahrer vorgegebenen Orientierung des Kraftfahrzeugs in der Endposition und/oder abhängig von Umgebungsinformationen und/oder Parkzoneninformationen, die vor und/oder während dem Einfahren des Kraftfahrzeugs in die Parkzone zum Erreichen der Temporärparkposition erfasst wurden, und/oder abhängig von Umgebungsinformationen und/oder Parkzoneninformationen, die in der Temporärparkposition des Kraftfahrzeugs erfasst werden, bestimmt wird. Insbesondere können die genannten Informationen mit zumindest einer, insbesondere mehreren, Erfassungseinheiten des Kraftfahrzeugs erfasst werden. Ist es in dem Zusammenhang ermöglicht, dass beim Anfahren an die Parkzone bereits Informationen über die Größe und/oder Lage der Parkzone und/oder Informationen über benachbarte Parkzonen durch entsprechende Erfassungseinheiten erfasst werden, können diese dann genutzt werden. Auch Informationen, die dann beim Einfahren des Kraftfahrzeugs in die Parkzone zum Erreichen der Temporärparkposition erfasst werden, können genutzt werden. Bezüglich der Orientierung des Kraftfahrzeugs in der Temporärparkposition kann eine vorwärts eingeparkte Temporärparkposition oder eine rückwärts eingeparkte Temporärparkposition berücksichtigt werden. Auch eine Orientierung einer Fahrzeuglängsachse zu einer Längsachse der Parkzone in dieser Temporärparkposition kann berücksichtigt werden.

Insbesondere kann eine derartige Information beispielsweise durch eine optische Erfassungseinrichtung, wie eine Kamera, erfasst werden. Diesbezüglich erfasste Bilder können dahingehend ausgewertet werden, dass eine derartige nicht-parallele Stellung des Kraftfahrzeugs in der Temporärparkposition zur Längsachse der Parkzone bestimmt werden kann.

Umgebungsinformationen können beispielsweise Informationen über einen Verkehrsfluss der Fahrbahn im Bereich der Parkzone sein. Umgebungsinformationen können auch Informationen über anderweitige, insbesondere statische, Objekte sein, die im Umgebungsbereich zur Parkzone auf der Fahrbahn angeordnet sind oder auf der gegenüberliegenden Seite zur Parkzone die Fahrbahn begrenzen. Dies können beispielsweise anderweitige Fahrzeuge sein, die abgestellt sind. Ebenso können dies jedoch Ergänzungselemente wie Wände, Sträucher, Mülltonnen oder dergleichen sein. Umgebungsinformationen können auch derartige sein, die eine direkt benachbarte Parkzone zur zu beparkenden Parkzone durch das Kraftfahrzeug betreffen. Auch können in dem Zusammenhang Orientierungen und Positionen dieser Belegobjekte in den benachbarten weiteren Parkzonen berücksichtigt sein.

Darüber hinaus ist es auch ermöglicht, dass weitere derartige Informationen, insbesondere Umgebungsinformationen und/oder Parkzoneninformationen, während des Durchführens des autonomen Parkvorgangs, insbesondere auf dem Weg von der Temporärparkposition aus der Parkzone heraus erfasst werden und berücksichtigt werden. Dadurch kann insbesondere auch ermöglicht werden, dass eine zunächst bestimmte Startposition auch nochmals korrigiert werden kann.

In einer vorteilhaften Ausführung ist vorgesehen, dass oben genannte Informationen mit zumindest zwei in der Erfassungsfunktion unterschiedlichen Erfassungseinheiten des Kraftfahrzeugs erfasst werden. Dadurch wird eine weitere Vorteilhaftigkeit erreicht, denn damit können umfängliche Informationen und/oder genauere Informationen erhalten werden. Denn so können unterschiedliche Erfassungseinheiten für unterschiedliche Bedingungen besser oder schlechter tauglich sein. Durch den Einsatz von zumindest zwei in der Erfassungsfunktion unterschiedlichen Erfassungseinheiten können somit mehrere und verbesserte Informationsauswertungen erreicht werden und somit ein umfänglicheres und präziseres Gesamtbild beziehungsweise eine genauere Gesamteinschätzung ermöglicht werden. Erfassungseinheiten können beispielsweise ein Radarsensor, ein Ultraschallsensor, eine optische Erfassungseinheit, wie eine Kamera oder auch ein Laserscanner, sein.

In einer vorteilhaften Ausführung ist vorgesehen, dass das Kraftfahrzeug beim autonomen Parkvorgang, der insbesondere von der Temporärparkposition bis zur Endparkposition reicht, nochmals vollständig aus der Parkzone ausgeparkt wird und ausgehend von einer sich dann außerhalb der Parkzone befindlichen Startposition in die Parkzone eingeparkt wird, bis es die Endparkposition erreicht hat.

In einer vorteilhaften Ausführung ist vorgesehen, dass sich das Kraftfahrzeug nach dem Verlassen des Fahrers zumindest dann, wenn sich der Fahrer außerhalb einer vorgegebenen Reichweite zum Kraftfahrzeug befindet, selbstständig verriegelt. Damit kann bei dem hier vorliegenden Szenario höchsten Sicherheitsanforderungen Genüge getan werden. Denn gerade dann, wenn der Fahrer nach dem Erreichen der Temporärparkposition das Kraftfahrzeug verlässt, auch unverzüglich den Umgebungsbereich des Kraftfahrzeugs verlässt, sodass er insbesondere den weiteren autonomen Parkvorgang des Kraftfahrzeugs nicht mehr beobachtet oder nicht mehr beobachten kann, ist auch ein unbefugter Zutritt zum Kraftfahrzeug für Dritte verhindert. Durch die oben genannte vorteilhafte Ausgestaltung wird dies insbesondere auch automatisch verhindert. Eine derartige selbstständige Verriegelung kann in vorteilhafter Weise auch unabhängig davon erfolgen, ob sich das Kraftfahrzeug dann noch in der Temporärparkposition befindet oder sich bereits beim Durchführen des autonomen Parkvorgangs befindet oder schon in der Endposition positioniert ist. Insbesondere erfolgt ein derartiges selbstständiges Verriegeln spätestens beim Erreichen der Endposition des Kraftfahrzeugs in der Parkzone. Somit kann auch bei einem vom Fahrer unbeaufsichtigten autonomen Parkvorgang ein unbefugter Zutritt Dritter zum Kraftfahrzeug vermieden werden. Es kann jedoch auch vorgesehen sein, dass der Fahrer manuell das Verriegeln des Kraftfahrzeugs initiiert und somit eine derartige Verriegelung nutzerinitiiert erfolgt. Dies kann beispielsweise dann der Fall sein, wenn der Fahrer nach dem Erreichen der Temporärparkposition das Kraftfahrzeug verlässt beziehungsweise verlassen hat, er sich jedoch noch im Umgebungsbereich des Kraftfahrzeugs befindet. Ebenso kann es jedoch auch vorgesehen sein, dass eine derartige Verriegelung automatisch erfolgt, wenn sich der Fahrer so weit vom Kraftfahrzeug entfernt hat, dass er eine Referenzzone um das Kraftfahrzeug verlassen hat. Eine derartige Referenzzone ist insbesondere vorgegeben. In dem Zusammenhang kann beispielsweise durch eine drahtlose Kommunikation zwischen einer fahrzeugseitigen Kommunikationseinheit und einem tragbaren elektronischen Schlüssel, den der Fahrer mitführt, ein derartiges Verlassen der Referenzzone um das Kraftfahrzeug detektiert werden. Damit ist es ermöglicht, dass ein Vergessen der Verriegelung durch den Fahrer selbst nicht dazu führt, dass das Kraftfahrzeug dann unverschlossen in der Parkzone abgestellt ist.

Vorzugsweise ist vorgesehen, dass zumindest dann, wenn sich das Kraftfahrzeug beim Durchführen des autonomen Parkvorgangs aus der Parkzone auf eine angrenzende Fahrbahn herausbewegt, eine optische Warneinrichtung des Kraftfahrzeugs durch das elektronische Parkassistenzsystem des Kraftfahrzeugs aktiviert wird. Damit kann die Aufmerksamkeit von anderen Verkehrsteilnehmern erhöht werden. Insbesondere kann somit auch weiteren erhöhten Sicherheitsaspekten Genüge getan werden. Es kann in dem Zusammenhang dann auch von anderen Verkehrsteilnehmern frühzeitig erkannt werden, dass hier ein Kraftfahrzeug vollautonom einen Parkvorgang durchführt.

Ein weiterer Aspekt der Erfindung betrifft ein Parkassistenzsystem für ein Kraftfahrzeug. Das elektronische Parkassistenzsystem weist eine Steuereinheit auf. Das elektronische Parkassistenzsystem ist zum Durchführen eines Verfahrens gemäß dem oben genannten Aspekt oder einer vorteilhaften Ausgestaltung ausgebildet. Insbesondere weist das Parkassistenzsystem ein Computerprogrammprodukt auf. Das Computerprogrammprodukt weist Befehle auf, die bei der Ausführung des Computerprogramms durch einen Computer, insbesondere des Parkassistenzsystems, diesen veranlassen, das Verfahren gemäß dem oben genannten Aspekt oder einer vorteilhaften Ausgestaltung davon auszuführen.

Ein weiterer Aspekt der Erfindung betrifft ein Kraftfahrzeug mit einem elektronischen Parkassistenzsystem gemäß dem oben genannten Aspekt und/oder einem Computerprogrammprodukt gemäß dem oben genannten Aspekt.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Darstellung eines Szenarios, bei welchem ein Kraftfahrzeug in einer Temporärparkposition in einer Parkzone abgestellt ist;
- Fig. 2: das Szenario gemäß Fig. 1, bei welchem das Kraftfahrzeug eine Teilphase eines autonomen Parkvorgangs ausgehend von der in Fig. 1 gezeigten Temporärparkposition in eine Startposition außerhalb der Parkzone durchgeführt hat;
- Fig. 3: eine Darstellung des Szenarios gemäß Fig. 1 und Fig. 2, in welcher das Kraftfahrzeug in einer durch einen autonomen Parkvorgang erreichten Endparkposition in der Parkzone positioniert ist;
- Fig. 4: ein weiteres Ausführungsbeispiel, bei welchem ein Szenario gezeigt ist, in dem das Kraftfahrzeug in einer Temporärparkposition in einer Parkzone dargestellt ist;
- Fig. 5: eine Darstellung des Szenarios gemäß Fig. 4, in der das Kraftfahrzeug durch eine Teilphase eines autonomen Parkvorgangs von der Temporärparkposition aus der Parkzone ausgefahren ist und eine Startposition außerhalb der Parkzone erreicht hat;
- Fig. 6: eine Darstellung des Szenarios gemäß Fig. 4 und Fig. 5, bei welcher das Kraftfahrzeug während des autonomen Parkvorgangs eine Zwischenposition außerhalb der Parkzone erreicht hat; und
- Fig. 7: eine Darstellung des Szenarios gemäß Fig. 4 bis Fig. 6, in welcher das Kraftfahrzeug in einer Endparkposition in der Parkzone dargestellt ist.

Bei dem im Folgenden erläuterten Ausführungsbeispiel handelt es sich um eine bevorzugte Ausführungsform der Erfindung.

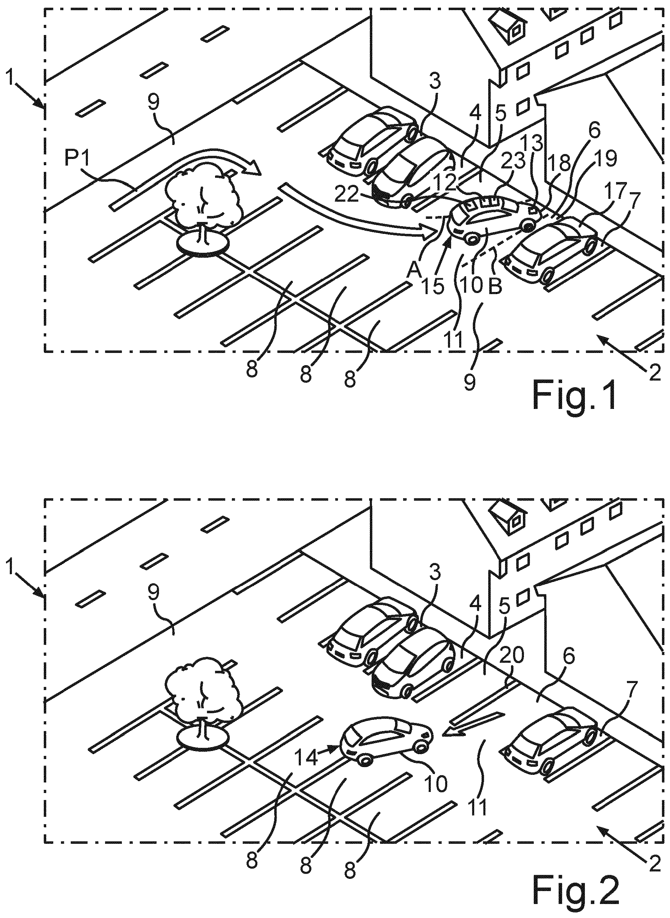

In den Figuren sind funktionsgleiche Elemente jeweils mit denselben Bezugszeichen versehen. In Fig. 1 ist in einer schematischen Darstellung ein Verkehrsszenario 1 gezeigt. Es ist ein Parkbereich 2 dargestellt, der eine Vielzahl, insbesondere zumindest zwei, Parkzonen aufweist. Die Parkzonen sind durch vorgegebene Begrenzungen markiert und kenntlich gemacht. Beispielhaft sind eine Parkzone 3, eine Parkzone 4, eine Parkzone 5, eine Parkzone 6, eine Parkzone 7 mit den entsprechenden Bezugszeichen versehen. Darüber hinaus sind, wie dies zu erkennen ist, noch weitere Parkzonen vorhanden, die einheitlich und teilweise mit dem Bezugszeichen 8 versehen sind.

Darüber hinaus ist auch eine Fahrbahn 9 gezeigt. Die Fahrbahn 9 befindet sich außerhalb der Flächen der Parkzonen 3 bis 8.

In Fig. 1 ist beispielhaft dargestellt, dass ein Kraftfahrzeug 10 auf einem durch einen Pfeil P1 gekennzeichneten beispielhaften Weg auf der Fahrbahn 9 bewegt wurde. Insbesondere ist dabei vorgesehen, dass das Kraftfahrzeug 10 durch einen im Kraftfahrzeug 10 befindlichen Fahrzeuginsassen, insbesondere einen Fahrer, entlang dieses Bewegungswegs gemäß dem P1 auf der Fahrbahn 9 bis vor die Parkzone 6 bewegt wurde. Dieser Bewegungsvorgang ist insbesondere durch den Fahrer des Kraftfahrzeugs 10 manuell durchgeführt. Darüber hinaus ist zu erkennen, dass das Kraftfahrzeug 10 in Fig. 1 bereits in einer Temporärparkposition 15 in der Parkzone 6 abgestellt ist. Insbesondere hat der Fahrer des Kraftfahrzeugs 10 das Kraftfahrzeug 10 von seiner Position außerhalb der Parkzone 6 in diese Temporärparkposition 15 in der Parkzone 6 manuell betrieben. Der Fahrer hat somit das Kraftfahrzeug 10 auf dem Bewegungsweg gemäß dem Pfeil P1 bis zu dieser Temporärparkposition 15 in der Parkzone 6 selbst gesteuert.

Wie zu erkennen ist, ist diese in Fig. 1 gezeigte beispielhafte Temporärparkposition 15 jedoch eine derartige, die keine vorgesehene und erforderliche Parkposition darstellt. Insbesondere hat der Fahrer das Kraftfahrzeug 10 in einem einzügigen Parkvorgang das Kraftfahrzeug 10 von außerhalb der Parkzone 6 in diese in Fig. 1 gezeigte ungenaue Temporärparkposition 15 gebracht. Die Parkzone 6 ist im Ausführungsbeispiel eine Querparklücke, die eine Längsachse B aufweist. Das Kraftfahrzeug 10 weist eine Fahrzeuglängsachse A auf. Wie bei dem nicht abschließend zu verstehenden Beispiel in Fig. 1 gezeigt ist, ist das Kraftfahrzeug 10 mit seiner Fahrzeuglängsachse A deutlich schräg gestellt zur Längsachse B der Parkzone 6 abgestellt. Insbesondere ist bei der beispielhaft gezeigten Temporärparkposition 15 das Kraftfahrzeug 10 bereichsweise in die zur Parkzone 6 benachbarte weitere Parkzone 5 hineinragend abgestellt. Darüber hinaus ist das Kraftfahrzeug 10 in dieser Temporärparkposition 15 auch beispielhaft noch ein wenig aus einem der Fahrbahn 9 zugewandten Einfahrbereich 11 der Parkzone 6 in die Fahrbahn 9 hineinragend positioniert.

Das Kraftfahrzeug 10 weist ein elektronisches Parkassistenzsystem 12 auf. Das Kraftfahrzeug 10 weist zumindest eine Erfassungseinheit 13 zur Erfassung der Umgebung auf. Insbesondere weist das Kraftfahrzeug 10 mehrere Erfassungseinheiten 13 auf. Vorzugsweise sind die mehreren Erfassungseinheiten 13 bezüglich ihrer Erfassungsfunktion unterschiedliche Erfassungseinheiten 13.

Es kann vorgesehen sein, dass durch diese zumindest eine Erfassungseinheit 13 Informationen beim Fortbewegen des Kraftfahrzeugs 10 auf dem Bewegungsweg gemäß Pfeil P1 erfasst werden. Insbesondere können zusätzlich oder anstatt dazu durch diese zumindest eine Erfassungseinheit 13 auch Informationen in der in Fig. 1 gezeigten Temporärparkposition 15 des Kraftfahrzeugs 1 erfasst werden. Dies können Umgebungsinformationen und/oder Parkzoneninformationen sein. Zusätzlich oder anstatt dazu können dies auch Informationen über die Orientierung des Kraftfahrzeugs 10, insbesondere zur Parkzonen 6 und/oder benachbarten anderen Parkzonen sein. Auch können dies entsprechende Informationen bezüglich der Orientierung des Kraftfahrzeugs 10 zur Fahrbahn 9 sein. Darüber hinaus können dies auch Informationen über das Verkehrsszenario auf der Fahrbahn 9 sein.

Das insbesondere durch einen Fahrer manuelle Einparken des Kraftfahrzeugs 10 in die Parkzone 6 bis zur in Fig. 1 gezeigten Temporärparkposition 15 stellt in einer vorteilhaften Ausführung einen ersten Parkvorgang eines gesamten Einparkszenarios des Kraftfahrzeugs 10 in die Parkzone 6 dar. Ausgehend von diesem durchgeführten ersten Parkvorgang ist es dann vorgesehen, dass der Fahrer des Kraftfahrzeugs 10 das Kraftfahrzeug 10 verlässt. Anschließend ist, insbesondere abhängig von zumindest einem Entscheidungskriterium, vorgesehen, dass insbesondere ein zweiter Parkvorgang des gesamten Einparkszenarios durchgeführt wird, der ein autonomer Parkvorgang ist. Insbesondere dann, wenn die Temporärparkposition 15 eine derartige ist, die die Beeinträchtigung anderer Verkehrsteilnehmer bedingt und/oder benachbarte Parkzonen 5 und/oder 7 bezüglich der Benutzung beeinträchtigt und/oder wenn dort bereits abgestellte andere Fahrzeuge am Zugang gehindert sind und/oder am Ausparken gehindert sind, wird dieser zweite autonome Parkvorgang durchgeführt. Insbesondere ist jedoch vorgesehen, dass dieser zweite Parkvorgang, nämlich der autonome Parkvorgang, dann durchgeführt wird, wenn die Temporärparkposition 15 als eine derartige vorliegt, die ordnungsgemäßen Parkpositionen nicht entspricht. Insbesondere ist es ermöglicht, dass ein derartiges Erkennen, ob eine aktuelle Temporärparkposition 15 derartigen ordnungsgemäßen Parkpositionen nicht entspricht, durch das elektronische Parkassistenzsystem 12 erfolgt. Dies kann insbesondere abhängig von den erfassten Umgebungsinformationen und/oder Parkzoneninformationen der Fall sein. Beispielsweise kann dies abhängig davon erfolgen, dass erkannt wird, dass das Kraftfahrzeug 10 unerwünscht schräg in der Parkzone 6 abgestellt ist und/oder noch unerwünscht nach hinten aus der Parkzone 6 in die Fahrbahn 9 hineinragt und/oder benachbarte Parkzonen, hier die Parkzone 5, teilweise mit belegt werden.

Es kann jedoch auch vorgesehen sein, dass das Durchführen des autonomen Parkvorgangs dann durchgeführt wird, wenn dies durch einen Fahrer des Kraftfahrzeugs 10 initiiert und somit vorgegeben wird.

Dieses Durchführen des autonomen Parkvorgangs zum Erreichen der Endposition des Kraftfahrzeugs 10 in der Parkzone 6 wird ausgehend von der Temporärparkposition 15 durchgeführt.

Bei dem in Fig. 1 gezeigten beispielhaften Szenario, bei dem, wie oben bereits beispielhaft dargestellt, der Fahrer das Kraftfahrzeug 10 nach dem Erreichen der gezeigten Temporärparkposition 15 verlassen hat und somit ausgestiegen ist, wird, insbesondere aufgrund der hier nicht tauglichen und nicht ordnungsgemäßen Parkposition in Form der Temporärparkposition 15, ein autonomer Parkvorgang durchgeführt. Insbesondere ist hier vorgesehen, dass dieser durch den Fahrer initiiert wird.

In vorteilhafter Weise ist vorgesehen, dass das tatsächliche Starten dieses, insbesondere durch den Fahrer initiierten, autonomen Parkvorgangs durch das elektronische Parkassistenzsystem 12 des Kraftfahrzeugs 10 selbst bestimmt wird. Dies kann insbesondere abhängig von aktuellen Verkehrssituationen auf der Fahrbahn 9 und/oder abhängig von zukünftig zu erwartenden Verkehrssituationen auf der Fahrbahn 9, insbesondere in dem Bereich der Fahrbahn 9, der an die Parkzone 6 angrenzt, durchgeführt. Insbesondere kann zusätzlich oder anstatt dazu das tatsächliche Starten dieses autonomen Parkvorgangs unabhängig davon durchgeführt werden, ob sich der ausgestiegene Fahrer noch neben dem Kraftfahrzeug 10 befindet oder nicht. Insbesondere erfolgt somit das Starten des autonomen Parkvorgangs unabhängig von einem möglichen Entfernen des Fahrers vom Kraftfahrzeug 10 nach dessen Verlassen des Kraftfahrzeugs 10.

In der Darstellung in Fig. 2 ist in dem Zusammenhang ein Szenario gezeigt, bei welchem der vollautonome Parkvorgang ausgehend von der in Fig. 1 erreichten Temporärparkposition 15 bereits gestartet ist und das Kraftfahrzeug 10 bereits wieder vollständig aus der Parkzone 6 ausgeparkt wurde.

Wie in dem beispielhaften Szenario, das nicht abschließend zu verstehen ist, zu erkennen ist, ist in Fig. 2 das Kraftfahrzeug 10 in einer Startposition 14 gezeigt. Diese Startposition 14 ist hier vollständig außerhalb der Parkzone 6. Sie ist auch unterschiedlich zu der in Fig. 1 gezeigten Temporärparkposition 15, in welcher das Kraftfahrzeug 10 grob positioniert in die Parkzone 6 eingefahren und entsprechend positioniert ist.

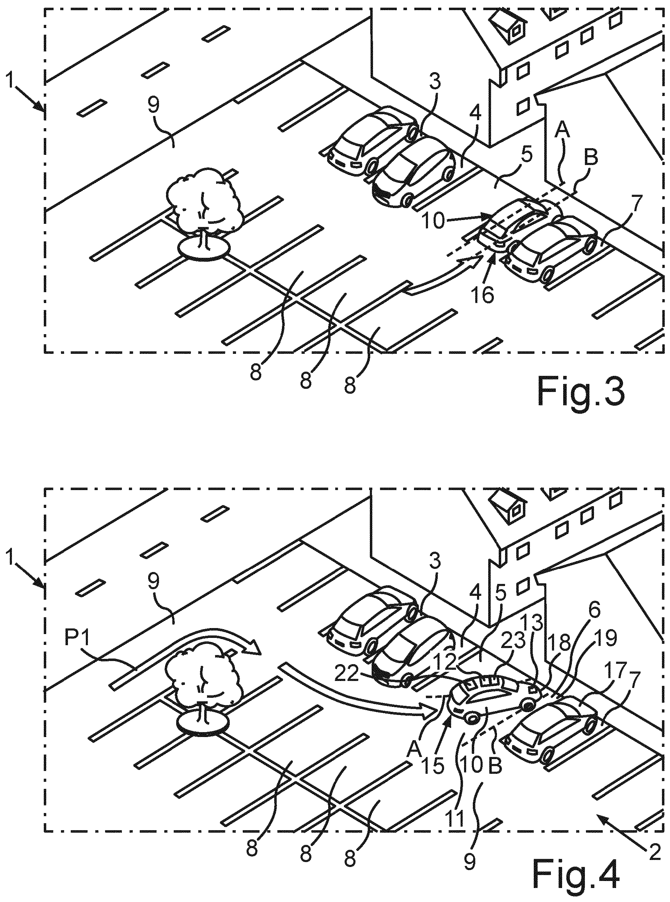

Die Startposition 14 ist im Beispiel gemäß Fig. 2 derart gewählt, dass sie in die gegenüberliegenden Parkzonen 8 reicht, sodass das Kraftfahrzeug 10 auch auf diesen Parkzonen 8 steht. Dies kann im gezeigten Ausführungsbeispiel deshalb erfolgen, da die Parkzonen 8 auf dem gegenüberliegenden Bereich zur Parkzone 6 nicht belegt sind. Insbesondere kann eine derartige Startposition 14 eingenommen werden, da durch die zumindest eine Erfassungseinheit 13 erkannt wurde, dass diese Parkzonen 8 nicht belegt sind. Dies ermöglicht in schneller und intelligenter Weise den autonomen Parkvorgang durchzuführen und den Umgebungsbereich so zu nutzen, dass der autonome Parkvorgang möglichst schnell absolviert werden kann. Im gezeigten Ausführungsbeispiel ist durch die spezifische Situation ermöglicht, dass das Kraftfahrzeug 10 in einem ersten Zug von der Temporärparkposition 15 in die Startposition 14 gebracht wird und in einem dann nur noch erfolgenden einen einzigen zweiten Zug von der Startposition 14 in die in Fig. 3 gezeigte Endparkposition 16 in der Parkzone 6 autonom gefahren wird. Damit ist im gezeigten Ausführungsbeispiel auch ein sehr effizienter, insbesondere schneller autonomer Parkvorgang, der den zweiten Parkvorgang des gesamten Parkszenarios darstellt, ermöglicht. In dieser in Fig. 3 gezeigten Endparkposition 16 des Kraftfahrzeugs 10 in der Parkzone 6 ist auch eine ordnungsgemäße Parkposition erreicht. Insbesondere ist hier die Fahrzeuglängsachse A parallel oder im Wesentlichen parallel zur Längsachse B der Parkzone 6.

Insbesondere ist vorgesehen, dass somit ausgehend von der Temporärparkposition 15 des Kraftfahrzeugs 1, insbesondere durch das elektronische Parkassistenzsystem 12 des Kraftfahrzeugs 10, die Startposition 14 für das Kraftfahrzeug 10 zum Durchführen des autonomen Parkvorgangs in die Parkzone 6 bestimmt wird, insbesondere seine Position außerhalb der Parkzone 6 bestimmt wird.

Insbesondere wird der vollautonome Parkvorgang abhängig von der Orientierung des Kraftfahrzeugs 10 in der Temporärparkposition 15, und/oder abhängig von einer vom Fahrer vorgegebenen Orientierung des Kraftfahrzeugs 10 in der Endposition 16, und/oder abhängig von Umgebungsinformationen, die vor und/oder während dem Einfahren des Kraftfahrzeugs 10 in die Parkzone 6 zum Erreichen der Temporärparkposition 15 erfasst wurden, und/oder abhängig von Parkzoneninformationen, die vor und/oder während des Einfahrens des Kraftfahrzeugs 10 in die Parkzone 6 zum Erreichen der Temporärparkposition 15 erfasst wurden, durchgeführt. Zusätzlich oder anstatt dazu kann auch vorgesehen sein, dass der vollautonome Parkvorgang abhängig von Umgebungsinformationen, die in der Temporärparkposition 15 des Kraftfahrzeugs 10 erfasst wurden, und/oder abhängig von Parkzoneninformationen, die in der Temporärparkposition 15 des Kraftfahrzeugs 10 erfasst wurden, bestimmt wird. Zusätzlich oder anstatt dazu kann vorgesehen sein, dass der vollautonome Parkvorgang abhängig von Umgebungsinformationen, die während des Ausparkens des Kraftfahrzeugs 10 aus der Parkzone 6 beginnend von der Temporärparkposition 15 erfasst werden, und/oder abhängig von Parkzoneninformationen, die beim Ausparken des Kraftfahrzeugs 10 ausgehend von der Temporärparkposition 15 erfasst werden, bestimmt wird.

Insbesondere wird das Kraftfahrzeug 10 bei diesem autonomen Parkvorgang nochmals vollständig aus der Parkzone 6 ausgeparkt und ausgehend von der außerhalb der Parkzone 6 erreichten Startposition 14 wird dann in einem einzügigen oder mehrzügigen Einparken das Kraftfahrzeug 10 in eine ordnungsgemäße Parkposition in der Parkzone 6 gebracht, die dann auch die Endparkposition 16 des Kraftfahrzeugs 10 ist.

Bei dem in Fig. 1 bis Fig. 3 gezeigten Beispiel ist die rechtsseitig zur Parkzone 6 ausgebildete Parkzone 7 beispielhaft durch ein weiteres Kraftfahrzeug 17 belegt. Die linksseitig zur Parkzone 6 ausgebildete Parkzone 5 ist beispielhaft nicht belegt.

Bei dem in Fig. 1 bis 3 gezeigten Szenario ist die Temporärparkposition 15 eine derartige, bei welcher das Kraftfahrzeug 10 vorwärts eingeparkt ist. Dies bedeutet, dass ein Frontbereich 18 des Kraftfahrzeugs 10 einem hinteren Ende 19 der Parkzone 6 zugewandt ist. Bei dem gezeigten Szenario ist vorgesehen, dass das Kraftfahrzeug 10 auch mit einer diesbezüglich gleichen Orientierung in der Endparkposition 16 in der Parkzone 6 abgestellt ist. In der Endparkposition 16 ist das Kraftfahrzeug 10 somit wiederum mit seinem Frontbereich 18 dem hinteren Ende 19 der Parkzone 6 zugewandt. In dem Zusammenhang kann in einer vorteilhaften Ausführung vorgesehen sein, dass das elektronische Parkassistenzsystem 12 den vollautonomen Parkvorgang derart durchführt, dass das Kraftfahrzeug 10 in der Endparkposition 16 die diesbezüglich gleiche Orientierung aufweist, wie es in der Temporärparkposition 15 orientiert war. In dem Zusammenhang kann die Orientierung des Kraftfahrzeugs 10 in der Temporärparkposition 15 erkannt werden, insbesondere durch Informationen der zumindest einen Erfassungseinheit 13 bestimmt werden.

Es kann jedoch auch vorgesehen sein, dass die Orientierung des Kraftfahrzeugs 10 in einer vorteilhaften Ausführung durch den Fahrer vorgegeben wird. Dies kann durch eine entsprechende Eingabe des Fahrers in das Parkassistenzsystem 12 erfolgen. Beispielsweise kann dies durch eine direkte Eingabe in einer Eingabeeinheit im Kraftfahrzeug 10 erfolgen. Es kann jedoch auch anhand einer tragbaren Kommunikationseinheit erfolgen. Eine derartige tragbare Kommunikationseinheit kann beispielsweise ein Kommunikationsendgerät des Fahrers, wie beispielsweise ein Mobilfunkendgerät, sein. Ebenso kann jedoch auch beispielsweise ein tragbarer Fahrzeugschlüssel, mit welchem das Führen und/oder der Zugang zum Kraftfahrzeug 10 berechtigt ist, eine derartige Eingabeeinheit sein.

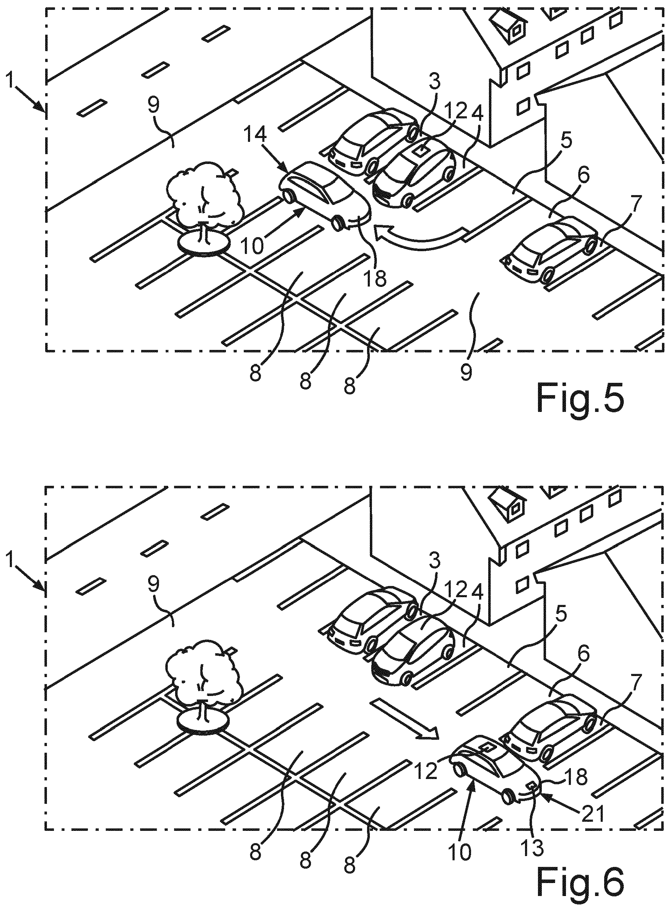

In den Darstellungen gemäß Fig. 4 bis Fig. 7 ist in einem weiteren beispielhaften Szenario das Durchführen eines Einparkens in die Parkzone 6 geschildert. Beispielhaft ist in Fig. 4 ein entsprechendes Szenario wie in Fig. 1 gezeigt, sodass auf die diesbezüglichen Erläuterungen auf Fig. 1 verwiesen wird. Es sei an dieser Stelle betont, dass nicht nur bei dem Szenario in Fig. 4, sondern auch in Fig. 1 eine andere Temporärparkposition, die insbesondere keine ordnungsgemäße Parkposition ist, vorliegen kann. Dies kann beispielsweise eine derartige sein, bei welcher das Kraftfahrzeug 10 noch etwas weiter in die Fahrbahn 9 hinein orientiert ist und/oder das Kraftfahrzeug 10 zwar nicht mit einer entsprechenden Schrägstellung in der Parkzone 6 angeordnet ist, dass es auch teilweise in die benachbarte freie Parkzone 7 hineinragt, jedoch so angeordnet ist, dass es beispielsweise, insbesondere gegebenenfalls auch relativ parallel zu einer Längsseitenbegrenzung 20 (Fig. 2 und Fig. 5) der Parkzone 6, abgestellt ist, insbesondere praktisch direkt anschließend dazu angeordnet ist. Auch vielfältige andere Temporärparkpositionen sind denkbar.

Ausgehend von der in Fig. 4 erreichten Temporärparkposition 15 verlässt dann der Fahrer das Kraftfahrzeug 10. Gemäß der Darstellung in Fig. 5 wird dann im Nachfolgenden wiederum ein vollautonomer Parkvorgang durchgeführt. Bei dem hier gezeigten Beispiel ist jedoch vorgesehen, dass der Fahrer angegeben hat, dass das Kraftfahrzeug 10 in der Endposition in der Parkzone 6 rückwärts eingeparkt sein soll. Aufgrund dessen, dass im gezeigten Ausführungsbeispiel insbesondere die Temporärparkposition 15 eine Vorwärtsparkposition ist, wird dann durch das elektronische Parkassistenzsystem 12 ein geeigneter vollautonomer Parkvorgang auf Basis dieser Vorgaben bestimmt. Insbesondere kann auch hier auf Basis der Umgebungsinformationen und/oder Parkzoneninformationen und/oder der auch bereits oben genannten vielfältigen anderen Informationen ein geeigneter vollautonomer Parkvorgang bestimmt werden. Beim hier vorliegenden Beispiel ist vorgesehen, jedoch keinesfalls zwingend und abschließend zu verstehen, dass das Kraftfahrzeug 10 ausgehend von der Temporärparkposition 15 gemäß Fig. 4 vollständig aus der Parkzone 6 rückwärtig autonom herausgefahren wird. Insbesondere ist es so in einer Startposition abgestellt, dass es im Wesentlichen parallel zu einer Orientierung der Fahrbahn 9 positioniert ist. Der autonome Parkvorgang wird beim hier gezeigten Ausführungsbeispiel mehrzügig durchgeführt. Im Beispiel gemäß Fig. 1 bis Fig. 3 ist dieser autonome Parkvorgang in einer minimalen Anzahl an Zügen, nämlich dort lediglich zwei Zügen, nämlich einem Rückwärtszug und einem Vorwärtszug, durchgeführt. Bei dem in Fig. 4 bis Fig. 7 erläuterten Szenario wird ein erster Zug dahingehend durchgeführt, dass ein Rückwärtszug ausgehend von der Temporärparkposition 15 zu der Startposition 14 in Fig. 5 durchgeführt wird. Um den Fahrerwunsch bezüglich eines rückwärtigen Einparkens des Kraftfahrzeugs 10 in die Parkzone 6 zu genügen, wird gemäß der Darstellung in Fig. 6 ausgehend von der Startposition 14 in Fig. 5 ein weiterer Zug, nämlich ein Vorwärtszug, durchgeführt. In dem Zusammenhang ist das Kraftfahrzeug 6 dann in der Darstellung in Fig. 6 in einer beispielhaften Zwischenposition 21 gezeigt. Im weiteren vollautonomen Parkvorgang wird dann ausgehend von der Zwischenposition 21 in einem weiteren Zug, nämlich in einem Rückwärtszug, das Kraftfahrzeug 10 in die Parkzone 6 eingeparkt und kann dann dort die gewünschte Endparkposition einnehmen.

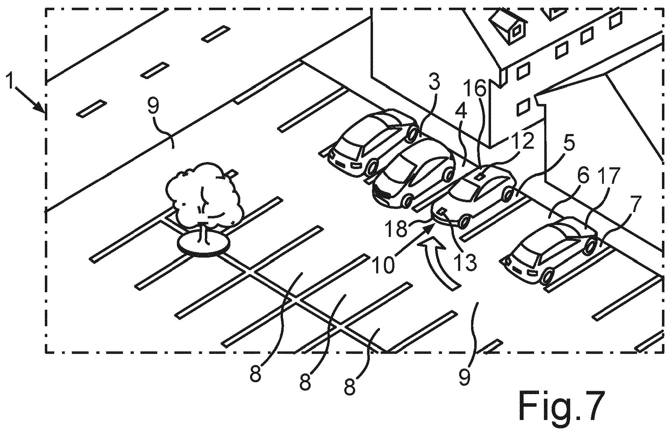

In Fig. 6 und Fig. 7 ist ein weiteres Ausführungsbeispiel explizit gezeigt. Im Unterschied zu dem oben geschilderten Szenario kann es auch ermöglicht sein, wie es im Beispiel gemäß Fig. 4 bis 7, insbesondere Fig. 6 und 7 explizit gezeigt ist, dass aufgrund von Informationen, insbesondere den bereits oben umfänglich genannten Umgebungsinformationen und/oder Parkzoneninformationen und/oder der Temporärparkposition 15 und/oder spezifischer Orientierungen des Kraftfahrzeugs 10 und/oder einer gewünschten Orientierung des Kraftfahrzeugs 10 in der Endparkposition 16 durch den Fahrer das Parkassistenzsystem 12 selbstständig bestimmt, welche Parkzone für das Einparken des Kraftfahrzeugs 10 genutzt wird. So kann es in dem Zusammenhang auch möglich sein, dass dann, wenn, wie im vorliegend gezeigten beispielhaften Fall, zwei direkt benachbarte Parkzonen 5 und 6 frei und somit nicht belegt sind, dieses Parkassistenzsystem 12 den möglichst schnellen und effizienten gesamten Parkvorgang bestimmt, insbesondere die dazu geeignetere Parkzone auswählt. So kann es in dem Zusammenhang auch vorgesehen sein, dass zwar in der Temporärparkposition 15 das Kraftfahrzeug 10 in der Parkzone 6 oder hauptsächlich in der Parkzone 6 positioniert ist, dass das elektronische Parkassistenzsystem 12 abhängig von den oben genannten Informationen zu dem Ergebnis kommt, dass die benachbarte freie Parkzone 5 die geeignetere wäre. So kann es dann, wie es in Fig. 6 und Fig. 7 gezeigt ist, vorgesehen sein, dass das Kraftfahrzeug 10 in die benachbarte Parkzone 5 autonom eingeparkt wird und dort die Endparkposition 16 einnimmt.

Insbesondere ist ein derartiges Szenario dann gegeben, wenn eine zur mit der Temporärparkposition 15 praktisch im Wesentlichen belegte Parkzone 6 unmittelbar benachbarte Parkzone 5 frei ist. Beispielsweise kann das geschilderte Szenario insbesondere auch nur dann als Möglichkeit von dem Parkassistenzsystem 12 in Betracht gezogen werden, wenn eine derartige direkt benachbarte Parkzone 5 frei ist. Dies insbesondere vor dem Hintergrund, dass kein unerwünscht weit entferntes Parken des Kraftfahrzeugs 10 auf derjenigen Parkzone erfolgt, in der der Fahrer bewusst und wissentlich sein Kraftfahrzeug 10 in der Temporärparkposition 15 abgestellt hat. Denn es soll in dem Zusammenhang dann auch vermieden werden, dass der Fahrer, wenn er unverzüglich das Kraftfahrzeug 10 verlässt und den autonomen Parkvorgang nicht mehr wahrnimmt, bei der Rückkehr zur Parkzone 6 dann das Kraftfahrzeug 10 nicht mehr wiederfindet, da es weit entfernt durch den autonomen Parkvorgang abgestellt wäre. Indem jedoch die Möglichkeit geschaffen ist, jedoch insbesondere darauf beschränkt ist, maximal auf einer unmittelbar direkt benachbarten freien Parkzone im Vergleich zu derjenigen Parkzone, in der das Kraftfahrzeug 10 durch den Fahrer in der Temporärparkposition 15 abgestellt wurde, zu parken, kann auch ein derartiges nicht mehr Wiederauffinden des Kraftfahrzeugs 10 durch den zurückkehrenden Fahrer vermieden werden.

Allgemein kann das Kraftfahrzeug auch eine Warneinrichtung 22 aufweisen, mit welcher insbesondere eine optische Signalisierung eines vollautonomen Parkvorgangs für andere Verkehrsteilnehmer ermöglicht ist. Insbesondere weist das Parkassistenzsystem 12 eine Steuereinheit 23 auf. Sie kann auch einen elektronischen Datenspeicher aufweisen.

### Bezugszeichenliste

- 1: Verkehrsszenario
- 2: Parkbereich
- 3: Parkzone
- 4: Parkzone
- 5: Parkzone
- 6: Parkzone
- 7: Parkzone
- 8: Parkzonen
- 9: Fahrbahn
- 10: Kraftfahrzeug
- 11: Einfahrbereich
- 12: Parkassistenzsystem
- 13: Erfassungseinheit
- 14: Startposition
- 15: Temporärparkposition
- 16: Endposition
- 17: Kraftfahrzeug
- 18: Frontbereich
- 19: hinteres Ende
- 20: Längsseitenbegrenzung
- 21: Zwischenposition
- 22: Warneinrichtung
- 23: Steuereinheit
- A: Fahrzeuglängsachse
- B: Längsachse
- P1: Bewegungsweg

## Patentansprüche

1. Verfahren zum Einparken eines Kraftfahrzeugs (10) in eine als gekennzeichnete Parkfläche ausgebildete Parkzone (5, 6), bei welchem das Kraftfahrzeug (10) auf einem Weg außerhalb der Parkzone (5, 6) bis zur Parkzone (5, 6) gefahren wird und dann in die Parkzone (5, 6) autonom eingeparkt wird, wobei
das Kraftfahrzeug (10) mit dem im Kraftfahrzeug (10) anwesenden Fahrer bis zur Parkzone (5, 6) gefahren wird und in einer Temporärparkposition (15) in der Parkzone (5, 6) abgestellt wird, wobei der Fahrer nach dem Erreichen der Temporärparkposition das Kraftfahrzeug (5, 6) verlässt und anschließend abhängig von zumindest einem Entscheidungskriterium ein autonomer Parkvorgang durchgeführt wird und das Kraftfahrzeug (10) durch den autonomen Parkvorgang in einer Endparkposition (16) in einer Parkzone (5, 6) positioniert wird,
**dadurch gekennzeichnet, dass**
das Durchführen des autonomen Parkvorgangs zum Erreichen der Endposition (16) ausgehend von der Temporärparkposition (15) durch den Fahrer initiiert wird, wobei der Fahrer selbst entscheiden kann, ob die Temporärparkposition (15) bereits so gut ist, dass kein Durchführen des autonomen Parkvorgangs erforderlich ist,
wobei der Fahrer beim Initiieren des autonomen Parkvorgangs vorgibt, ob das Kraftfahrzeug (10) beim autonomen Parkvorgang vorwärts oder rückwärts in die Parkzone (5, 6) eingeparkt werden soll.

2. Verfahren nach Anspruch 1,
**dadurch gekennzeichnet, dass**
die Temporärparkposition (15) durch ein manuelles Führen des Kraftfahrzeugs (10) durch den Fahrer erreicht wird.

3. Verfahren nach Anspruch 1 oder 2,
**dadurch gekennzeichnet, dass**
die Temporärparkposition (15) durch ein einzügiges Einfahren des Kraftfahrzeugs (10) in die Parkzone (5, 6) von außerhalb der Parkzone (5, 6) erreicht wird.

4. Verfahren nach einem der vorhergehenden Ansprüche,
**dadurch gekennzeichnet, dass**
das tatsächliche Starten des, insbesondere durch den Fahrer initiierten, autonomen Parkvorgangs durch ein Parkassistenzsystem (12) des Kraftfahrzeugs (10) selbst bestimmt wird, insbesondere abhängig von aktuellen und/oder zukünftigen Verkehrssituationen in einem Bereich einer an die Parkzone (5, 6) angrenzenden Fahrbahn (9) durchgeführt wird und unabhängig davon durchgeführt wird, ob sich der Fahrer noch neben dem Kraftfahrzeug (10) befindet oder nicht, insbesondere unabhängig von einem Entfernen des Fahrers vom Kraftfahrzeug (10) nach dem Verlassen des Kraftfahrzeugs (10) durchgeführt wird.

5. Verfahren nach Anspruch 4,
**dadurch gekennzeichnet, dass**
das tatsächliche Starten des durch den Fahrer initiierten, autonomen Parkvorgangs durch ein Parkassistenzsystem (12) des Kraftfahrzeugs (10) selbst bestimmt wird, wobei der autonome Parkvorgang dann durchgeführt wird, wenn die Temporärparkposition (15) als eine derartige vorliegt, die ordnungsgemäßen Parkpositionen nicht entspricht, wobei das Erkennen, ob eine aktuelle Temporärparkposition (15) derartigen ordnungsgemäßen Parkpositionen nicht entspricht, durch das elektronische Parkassistenzsystem (12) erfolgt.

6. Verfahren nach einem der vorhergehenden Ansprüche,
**dadurch gekennzeichnet, dass**
wenn die Temporärparkposition (15) als eine derartige vorliegt, die ordnungsgemäßen Parkpositionen nicht entspricht, die Temporärparkposition (15) eine derartige ist,
- bei welcher das Kraftfahrzeug (10) schräg in der als Längsparklücke oder Querparklücke ausgebildeten Parkzone (5, 6) angeordnet ist, und/oder
- bereits abgestellte Kraftfahrzeuge zum Einsteigen nur noch schwer zugänglich sind, und/oder
- die zwar ein im Wesentlichen paralleles Ausrichten der Fahrzeuglängsachse zu der Längsachse der Parkposition aufweist, jedoch das Kraftfahrzeug (10) im Hinblick auf die Breitenrichtung der Parkzone (5, 6) deutlich außermittig positioniert ist, und/oder
- bei welcher das Kraftfahrzeug (10) auch auf einer Bodenmarkierung, die eine Längsbegrenzung der Parkzone (5 ,6) darstellt, abgestellt ist, und/oder
- bei welcher das Kraftfahrzeug (10) noch nicht vollständig in die Parkzone (5, 6) eingefahren ist und in dem Zusammenhang noch ein Stück über den Einfahrbereich der Parkzone (5, 6) aus der Parkzone (5, 6) herausstehend angeordnet ist.

7. Verfahren nach einem der vorhergehenden Ansprüche,
**dadurch gekennzeichnet, dass**
ausgehend von der Temporärparkposition (15) des Kraftfahrzeugs (10), insbesondere durch das Parkassistenzsystem (12) des Kraftfahrzeugs (10), eine Startposition (14) für das Kraftfahrzeugs (10) zum Durchführen des autonomen Parkvorgangs in die Parkzone (5, 6) außerhalb der Parkzone (5, 6) bestimmt wird und das Kraftfahrzeug (10) autonom von der Temporärparkposition (15) bis zur Startposition (14) aus der Parkzone (5, 6) heraus bewegt wird, wobei nach dem Erreichen der Startposition (14) das autonome Einparken in die Parkzone (5, 6) bis zur Endparkposition (16) des Kraftfahrzeugs (10) in der Parkzone (5, 6) durchgeführt wird.

8. Verfahren nach einem der vorhergehenden Ansprüche,
**dadurch gekennzeichnet, dass**
der autonome Parkvorgang durch ein Parkassistenzsystem (12) des Kraftfahrzeugs (10) abhängig von der Orientierung des Kraftfahrzeugs (10) in der Temporärparkposition (15), und/oder abhängig einer vom Fahrer vorgegebenen Orientierung des Kraftfahrzeugs (10) in der Endparkposition (16), und/oder abhängig von Umgebungsinformationen und/oder Parkzoneninformationen, die vor und/oder während dem Einfahren des Kraftfahrzeugs (10) in die Parkzone (5, 6) zum Erreichen der Temporärparkposition (15) erfasst wurden, und/oder abhängig von Umgebungsinformationen und/oder Parkzoneninformationen, die in der Temporärparkposition (15) des Kraftfahrzeugs (10) erfasst wurden, und/oder abhängig von Umgebungsinformationen und/oder Parkzoneninformationen, die während dem Ausfahren des Kraftfahrzeugs (10) aus der Parkzone (10) ausgehend von der Temporärparkposition (15) erfasst werden, bestimmt wird.

9. Verfahren nach Anspruch 8,
**dadurch gekennzeichnet, dass**
die genannten Informationen mit zumindest einer Erfassungseinheit (13) des Kraftfahrzeugs (10) erfasst werden.

10. Verfahren nach Anspruch 9,
**dadurch gekennzeichnet, dass**
Informationen mit zumindest zwei in der Erfassungsfunktion unterschiedlichen Erfassungseinheiten (13) des Kraftfahrzeugs (10) erfasst werden.

11. Verfahren nach einem der vorhergehenden Ansprüche,
**dadurch gekennzeichnet, dass**
das Kraftfahrzeug (10) beim autonomen Parkvorgang nochmals vollständig aus der Parkzone (5, 6) ausgeparkt wird und ausgehend von einer Startposition (14) außerhalb der Parkzone (5, 6) wieder eingeparkt wird, bis es die Endparkposition (16) erreicht hat.

12. Verfahren nach einem der vorhergehenden Ansprüche,
**dadurch gekennzeichnet, dass**
sich das Kraftfahrzeug (10) nach dem Verlassen des Fahrers zumindest dann, wenn sich der Fahrer außerhalb einer vorgegebenen Reichweite zum Kraftfahrzeug (10) befindet, selbständig verriegelt, insbesondere unabhängig davon ob es sich dann noch in der Temporärparkposition (15) oder beim Durchführen des autonomen Parkvorgangs oder schon in der Endparkposition (16) befindet.

13. Verfahren nach einem der vorhergehenden Ansprüche,
**dadurch gekennzeichnet, dass**
zumindest dann, wenn sich das Kraftfahrzeug (10) beim Durchführen des autonomen Parkvorgangs aus der Parkzone (5, 6) auf eine angrenzende Fahrbahn (9) herausbewegt, eine optische Warneinrichtung (22) des Kraftfahrzeugs (10) durch das Parkassistenzsystem (12) des Kraftfahrzeugs (10) aktiviert wird.

14. Parkassistenzsystem (12) für ein Kraftfahrzeug (10), mit einer Steuereinheit (23), wobei das Parkassistenzsystem (12) zum Durchführen eines Verfahrens nach einem der vorhergehenden Ansprüche ausgebildet ist, insbesondere dazu ein Computerprogrammprodukt aufweist.

15. Kraftfahrzeug (1) mit einem Parkassistenzsystem (12) nach Anspruch 13.

## Claims

1. Method for parking a motor vehicle (10) in a parking zone (5, 6) designed as a marked parking area, in which method the motor vehicle (10) is driven on a path outside the parking zone (5, 6) to the parking zone (5, 6) and is then parked autonomously in the parking zone (5, 6),
the motor vehicle (10) being driven to the parking zone (5, 6) with the driver present in the motor vehicle (10) and being parked in a temporary parking position (15) in the parking zone (5, 6), the driver leaving the motor vehicle (5, 6) after the temporary parking position has been reached and then, depending on at least one decision criterion, an autonomous parking process being carried out and the motor vehicle (10) being positioned in a final parking position (16) in a parking zone (5, 6) by the autonomous parking process,
**characterized in that**
the execution of the autonomous parking process to reach the final position (16) starting from the temporary parking position (15) is initiated by the driver, the driver being able to decide himself whether the temporary parking position (15) is already so good that no execution of the autonomous parking process is necessary,
the driver specifying, when initiating the autonomous parking process, whether the motor vehicle (10) is to be parked forward or backward into the parking zone (5, 6) during the autonomous parking process.

2. Method according to claim 1,
**characterized in that**
the temporary parking position (15) is reached by virtue of the driver manually driving the motor vehicle (10).

3. Method according to claim 1 or 2,
**characterized in that**
the temporary parking position (15) is reached by virtue of the motor vehicle (10) being driven into the parking zone (5, 6) from outside the parking zone (5, 6).

4. Method according to any of the preceding claims,
**characterized in that**
the actual start of the autonomous parking process, in particular initiated by the driver, is determined by a parking assistance system (12) of the motor vehicle (10) itself, is carried out in particular depending on current and/or future traffic situations in a region of a roadway (9) adjacent to the parking zone (5, 6) and is carried out regardless of whether the driver is still next to the motor vehicle (10) or not, in particular is carried out regardless of whether the driver has moved away from the motor vehicle (10) after leaving the motor vehicle (10).

5. Method according to claim 4,
**characterized in that**
the actual start of the autonomous parking process initiated by the driver is determined by a parking assistance system (12) of the motor vehicle (10) itself, the autonomous parking process being carried out if the temporary parking position (15) is one which does not correspond to correct parking positions, the detection of whether a current temporary parking position (15) does not correspond to correct parking positions of this kind being carried out by the electronic parking assistance system (12).

6. Method according to any of the preceding claims,
**characterized in that**
if the temporary parking position (15) is one that does not correspond to correct parking positions, the temporary parking position (15) is one
- in which the motor vehicle (10) is arranged obliquely in the parking zone (5, 6) designed as a longitudinal parking space or transverse parking space, and/or
- in which motor vehicles that have already been parked are difficult to access for boarding, and/or
- which has a substantially parallel alignment of the longitudinal axis of the vehicle to the longitudinal axis of the parking position, but the motor vehicle (10) is positioned significantly off-center with respect to the width direction of the parking zone (5, 6), and/or
- in which the motor vehicle (10) is also parked on a ground marking which represents a longitudinal boundary of the parking zone (5, 6), and/or
- in which the motor vehicle (10) has not yet completely entered the parking zone (5, 6) and in this context is still arranged protruding a little from the parking zone (5, 6) beyond the entry region of the parking zone (5, 6).

7. Method according to any of the preceding claims,
**characterized in that**
starting from the temporary parking position (15) of the motor vehicle (10), a starting position (14) for the motor vehicle (10) for carrying out the autonomous parking process into the parking zone (5, 6) is determined outside the parking zone (5, 6), in particular by the parking assistance system (12) of the motor vehicle (10), and the motor vehicle (10) is moved autonomously from the temporary parking position (15) to the starting position (14) out of the parking zone (5, 6), the autonomous parking into the parking zone (5, 6) being carried out after the starting position (14) has been reached, up to the final parking position (16) of the motor vehicle (10) in the parking zone (5, 6).

8. Method according to any of the preceding claims,
**characterized in that**
the autonomous parking process is determined by a parking assistance system (12) of the motor vehicle (10) depending on the orientation of the motor vehicle (10) in the temporary parking position (15), and/or depending on an orientation of the motor vehicle (10) in the final parking position (16) specified by the driver, and/or depending on environmental information and/or parking zone information that was acquired before and/or during the entry of the motor vehicle (10) into the parking zone (5, 6) to reach the temporary parking position (15), and/or depending on environmental information and/or parking zone information that was acquired in the temporary parking position (15) of the motor vehicle (10), and/or depending on environmental information and/or parking zone information that is acquired during the exit of the motor vehicle (10) from the parking zone (10) starting from the temporary parking position (15).

9. Method according to claim 8,
**characterized in that**
said information is acquired by at least one acquisition unit (13) of the motor vehicle (10).

10. Method according to claim 9,
**characterized in that**
information is acquired by at least two acquisition units (13) of the motor vehicle (10) which have different acquisition functions.

11. Method according to any of the preceding claims,
**characterized in that**
the motor vehicle (10) is completely moved out of the parking zone (5, 6) again during the autonomous parking process and is parked again from a starting position (14) outside the parking zone (5, 6) until it has reached the final parking position (16).

12. Method according to any of the preceding claims,
**characterized in that**
the motor vehicle (10) locks itself automatically after the driver has left the vehicle at least when the driver is outside a predetermined range of the motor vehicle (10), in particular regardless of whether it is still in the temporary parking position (15) or in the midst of the autonomous parking process or already in the final parking position (16).

13. Method according to any of the preceding claims,
**characterized in that**
at least when the motor vehicle (10) moves out of the parking zone (5, 6) onto an adjacent roadway (9) during the autonomous parking process, an optical warning device (22) of the motor vehicle (10) is activated by the parking assistance system (12) of the motor vehicle (10).

14. Parking assistance system (12) for a motor vehicle (10), having a control unit (23), wherein the parking assistance system (12) is designed to carry out a method according to any of the preceding claims, in particular has a computer program product for this purpose.

15. Motor vehicle (1) having a parking assistance system (12) according to claim 13.

## Revendications

1. Procédé permettant de garer un véhicule automobile (10) dans une zone de stationnement (5, 6) réalisée sous la forme d'une surface de stationnement caractérisée, dans lequel le véhicule automobile (10) est conduit sur un trajet à l'extérieur de la zone de stationnement (5, 6) jusqu'à la zone de stationnement (5, 6) et est ensuite garé de manière autonome dans la zone de stationnement (5, 6), dans lequel
le véhicule automobile (10) est conduit avec le conducteur présent dans le véhicule automobile (10) jusqu'à la zone de stationnement (5, 6) et est stationné dans une position de stationnement temporaire (15) dans la zone de stationnement (5, 6), dans lequel le conducteur quitte le véhicule automobile (5, 6) après avoir atteint la position de stationnement temporaire et une opération de stationnement autonome est ensuite exécutée en fonction d'au moins un critère de décision et le véhicule automobile (10) est positionné par l'opération de stationnement autonome dans une position de stationnement finale (16) dans une zone de stationnement (5, 6),
**caractérisé en ce que**
l'exécution de l'opération de stationnement autonome pour atteindre la position finale (16) est initiée par le conducteur à partir de la position de stationnement temporaire (15), dans lequel le conducteur peut décider lui-même si la position de stationnement temporaire (15) est déjà suffisamment bonne pour qu'aucune exécution de l'opération de stationnement autonome ne soit nécessaire,
dans lequel le conducteur, lors de l'initiation de l'opération de stationnement autonome, prédéfinit si le véhicule automobile (10) doit être garé en marche avant ou en marche arrière dans la zone de stationnement (5, 6) lors de l'opération de stationnement autonome.

2. Procédé selon la revendication 1,
**caractérisé en ce que**
la position de stationnement temporaire (15) est atteinte par un guidage manuel du véhicule automobile (10) par le conducteur.

3. Procédé selon la revendication 1 ou 2,
**caractérisé en ce que**
la position de stationnement temporaire (15) est atteinte par une entrée en une seule fois du véhicule automobile (10) dans la zone de stationnement (5, 6) depuis l'extérieur de la zone de stationnement (5, 6).

4. Procédé selon l'une des revendications précédentes,
**caractérisé en ce que**
le démarrage effectif de l'opération de stationnement autonome, en particulier initiée par le conducteur, est déterminé par un système d'assistance au stationnement (12) du véhicule automobile (10) lui-même, est exécuté en particulier en fonction de situations de circulation actuelles et/ou futures dans une plage d'une voie de circulation (9) adjacente à la zone de stationnement (5, 6) et est exécuté indépendamment du fait que le conducteur se trouve encore ou non à côté du véhicule automobile (10), en particulier est exécuté indépendamment d'un éloignement du conducteur du véhicule automobile (10) après avoir quitté le véhicule automobile (10).

5. Procédé selon la revendication 4,
**caractérisé en ce que**
le démarrage effectif de l'opération de stationnement autonome initiée par le conducteur est déterminé par un système d'assistance au stationnement (12) du véhicule automobile (10) lui-même, dans lequel l'opération de stationnement autonome est exécutée lorsque la position de stationnement temporaire (15) est présente comme ne correspondant pas à des positions de stationnement correctes, dans lequel la reconnaissance du fait qu'une position de stationnement temporaire actuelle (15) ne correspond pas à de telles positions de stationnement correctes est effectuée par le système d'assistance au stationnement (12) électronique.

6. Procédé selon l'une des revendications précédentes,
**caractérisé en ce que**
si la position de stationnement temporaire (15) est présente comme ne correspondant pas à des positions de stationnement correctes, la position de stationnement temporaire (15) est une position,
- dans laquelle le véhicule automobile (10) est agencé en biais dans la zone de stationnement (5, 6) réalisée comme une place de stationnement longitudinale ou une place de stationnement transversale, et/ou
- l'accès à des véhicules déjà stationnés est difficile, et/ou
- qui présente certes une orientation essentiellement parallèle de l'axe longitudinal de véhicule par rapport à l'axe longitudinal de la position de stationnement, mais le véhicule automobile (10) est positionné de manière nettement excentrée par rapport à la direction de la largeur de la zone de stationnement (5, 6), et/ou
- dans laquelle le véhicule automobile (10) est également stationné sur un marquage au sol qui constitue une limite longitudinale de la zone de stationnement (5, 6), et/ou
- dans laquelle le véhicule automobile (10) n'est pas encore complètement entré dans la zone de stationnement (5, 6) et est agencé, dans ce contexte, en dépassant encore un peu de la zone de stationnement (5, 6) au-delà de la plage d'entrée de la zone de stationnement (5, 6).

7. Procédé selon l'une des revendications précédentes,
**caractérisé en ce que**
à partir de la position de stationnement temporaire (15) du véhicule automobile (10), une position de départ (14) pour le véhicule automobile (10) pour l'exécution de l'opération de stationnement autonome dans la zone de stationnement (5, 6) est déterminée en dehors de la zone de stationnement (5, 6), en particulier par le système d'assistance au stationnement (12) du véhicule automobile (10) et le véhicule automobile (10) est déplacé de manière autonome de la position de stationnement temporaire (15) jusqu'à la position de départ (14) hors de la zone de stationnement (5, 6), dans lequel le stationnement autonome dans la zone de stationnement (5, 6) est exécuté après que la position de départ (14) a été atteinte jusqu'à la position de stationnement finale (16) du véhicule automobile (10) dans la zone de stationnement (5, 6).

8. Procédé selon l'une des revendications précédentes,
**caractérisé en ce que**
l'opération de stationnement autonome est déterminée par un système d'assistance au stationnement (12) du véhicule automobile (10) en fonction de l'orientation du véhicule automobile (10) dans la position de stationnement temporaire (15), et/ou en fonction d'une orientation du véhicule automobile (10) prédéfinie par le conducteur dans la position de stationnement finale (16), et/ou en fonction d'informations d'environnement et/ou d'informations de zone de stationnement, qui ont été détectées avant et/ou pendant l'entrée du véhicule automobile (10) dans la zone de stationnement (5, 6) pour atteindre la position de stationnement temporaire (15), et/ou en fonction d'informations d'environnement et/ou d'informations de zone de stationnement qui ont été détectées dans la position de stationnement temporaire (15) du véhicule automobile (10), et/ou en fonction d'informations d'environnement et/ou d'informations de zone de stationnement qui sont détectées pendant la sortie du véhicule automobile (10) de la zone de stationnement (10) en partant de la position de stationnement temporaire (15).

9. Procédé selon la revendication 8,
**caractérisé en ce que**
lesdites informations sont détectées avec au moins une unité de détection (13) du véhicule automobile (10).

10. Procédé selon la revendication 9,
**caractérisé en ce que**
les informations sont détectées avec au moins deux unités de détection (13) du véhicule automobile (10), différentes dans la fonction de détection.

11. Procédé selon l'une des revendications précédentes,
**caractérisé en ce que**
lors de l'opération de stationnement autonome, le véhicule automobile (10) est encore une fois complètement sorti de la zone de stationnement (5, 6) et est à nouveau garé en partant d'une position de départ (14) en dehors de la zone de stationnement (5, 6) jusqu'à ce qu'il ait atteint la position de stationnement finale (16).

12. Procédé selon l'une des revendications précédentes,
**caractérisé en ce que**
le véhicule automobile (10) se verrouille automatiquement après le départ du conducteur, au moins lorsque le conducteur se trouve en dehors d'une portée prédéfinie par rapport au véhicule automobile (10), en particulier indépendamment du fait que le véhicule se trouve alors encore dans la position de stationnement temporaire (15) ou lors de l'exécution de l'opération de stationnement autonome ou déjà dans la position de stationnement finale (16).

13. Procédé selon l'une des revendications précédentes,
**caractérisé en ce que**
au moins lorsque le véhicule automobile (10), lors de l'exécution de l'opération de stationnement autonome, se déplace hors de la zone de stationnement (5, 6) sur une voie de circulation (9) adjacente, un dispositif d'avertissement optique (22) du véhicule automobile (10) est activé par le système d'assistance au stationnement (12) du véhicule automobile (10).

14. Système d'assistance au stationnement (12) pour un véhicule automobile (10), comportant une unité de commande (23), dans lequel le système d'assistance au stationnement (12) est réalisé pour exécuter un procédé selon l'une des revendications précédentes, en particulier présente à cet effet un produit programme d'ordinateur.

15. Véhicule automobile (1) comportant un système d'assistance au stationnement (12) selon la revendication 13.
